# EUROPEAN PATENT SPECIFICATION

(11) **EP 2 741 541 B1**
(45) Date of publication and mention of the grant of the patent: **29.06.2016**
(21) Application number: 12825591.6
(22) Date of filing: 04.07.2012
(51) Int. Cl.: H04L 29/06

(54) **CAPABILITY INQUIRY METHOD, COMMUNICATION TERMINAL AND APPLICATION SERVER**
KAPAZITÄTSABFRAGEVERFAHREN, KOMMUNIKATIONSENDGERÄT UND ANWENDUNGSSERVER
PROCÉDÉ D'INTERROGATION DE CAPACITÉ, TERMINAL DE COMMUNICATION ET SERVEUR D'APPLICATION

(30) Priority: 22.08.2011 CN 201110241371
(43) Date of publication of application: 11.06.2014
(73) Proprietor: Huawei Technologies Co., Ltd., Longgang District Shenzhen, Guangdong 518129 (CN)
(72) Inventor: MA, Jiabin, Shenzhen Guangdong 518129 (CN)
(74) Representative: Pfenning, Meinig & Partner mbB
(86) International application number: PCT/CN2012/078144
(87) International publication number: WO 2013/026327

(56) References cited:
- WO-A1-2010/072242
- WO-A1-2010/099829
- WO-A1-2010/099829
- CN-A- 101 355 429
- US-A1- 2008 279 119

## Description

### FIELD OF THE INVENTION

The present invention pertains to the mobile communication field, and in particular, relates to a method for requesting capability information, a requesting terminal, and an application server.

### BACKGROUND OF THE INVENTION

The Session Initiation Protocol (Session Initiation Protocol, SIP) is a part of an Internet Engineering Task Force (Internet Engineering Task Force, IETF) standard process, and is used to establish, modify, and terminate a multimedia session between message users on an IP network.

An IP multimedia subsystem (IP Multimedia Subsystem, IMS) put forward by the 3rd Generation Partnership Project (3rd Generation Partnership Project, 3GPP) is a standard system supporting IP multimedia services and independent of access technologies. The IMS is a SIP-based system, which establishes, manages and terminates various multimedia services by using a SIP call control mechanism.

In applications of an IMS network, before initiating related operations, a calling user usually queries the state of a called user and supported service capabilities through a capability query request (SIP OPTIONS). A capability or service discovery function is a key to a Rich Communication Suite-enhanced (Rich Communication Suite -enhanced, RCS-e). Based on the capability discovery mechanism, a user may know which subset services of the RCS-e within a specific time may be used with and/or used to communicate with other contacts.

In the prior art, a requesting terminal sends a SIP OPTIONS message every time when querying capability information of a called user, and obtains a SIP OPTIONS 200 Ok response. Because each user has plenty of contacts, a large quantity of such messages are sent, resulting in heavy network traffic, and causing problems such as large power consumption of the terminal and poor experience.

Document US2008/279119 discloses a method for handling multimedia conference calls in a telecommunication network. To determine the capabilities of the other terminals in a group, a first terminal sends a query message to a group server. The group server sends further query messages to the other terminals and collects their responses containing their capabilities. The group server analyzes the capabilities to determine a common set of capabilities. The group server then sends the common set of capabilities in a response to the first terminal.

Document WO2010/099829 disclose a method for handling a Session Initiation Protocol (SIP) OPTIONS capability query message in a communication network. A SIP proxy node receives a SIP OPTIONS message from a querying node. It sends the message to a plurality of devices, and receives a response from at least two of the plurality of devices. Each response includes an identity of the responding device and an indication of the capabilities of the responding device. Each received response is stored in a memory, and a reply message is generated. The reply message includes the identities and capabilities of all of the responding devices. This reply message is then sent to the querying node.

### SUMMARY OF THE INVENTION

Embodiments of the present invention provide a capability query method, a communication terminal, and an application server to solve the problem that heavy network traffic is caused by capability query requests due to plenty of contacts in the prior art.

A capability query method provided by an embodiment of the present invention includes:
Integrating (S101) uniform resource identifiers of one or more target terminals into a capability query request and sending the capability query request to an application server; and
receiving (S102) a target terminal capability query response forwarded by the application server, and analyzing the capability query response to obtain capability information of the target terminal;
wherein the integrating uniform resource identifiers of one or more target terminals into a capability query request comprises:
   using an extensible markup language and a list mode to record uniform resource identifiers of multiple target terminals in a list element of the integrated capability query request, and setting a message header field in the capability query request.

A capability query provided by an embodiment of the present invention includes:
parsing a capability query request from a requesting terminal, wherein uniform resource identifiers of multiple target terminals are recorded in a list element of the capability query request by using a list mode and an extensible markup language and a message header field is set in the capability query request; generating capability query requests corresponding to each target terminal according to identifiers of one or more target terminals in the capability query request, and sending the generated capability query requests to the corresponding target terminals respectively;
receiving a capability query response of the one or more target terminals, aggregating capability information in the capability query response of the one or more target terminals, and sending the aggregated capability information to the requesting terminal.

A communication terminal provided by an embodiment of the present invention includes:
an integrating unit, configured to integrate uniform resource identifiers of one or more target user terminals whose capability information needs to be queried into a capability query request;
a sending unit, configured to send the integrated capability query request to an application server;
a receiving unit, configured to receive a capability query response aggregated by the application server; and
an analyzing unit, configured to analyze the aggregated capability query response received by the receiving unit to obtain a capability query response of a corresponding target terminal;
wherein the analyzing unit is further configured to analyze the obtained target terminal capability information, compare the capability information with a list of capability query requests, and record a target terminal to which a capability query request needs to be retransmitted.

An application server provided by an embodiment of the present invention includes:
a receiving unit, configured to receive an integrated capability query request from a requesting terminal or a capability query response from a target terminal; wherein uniform resource identifiers of multiple target terminals are recorded in a list element of the capability query request by using a list mode and an extensible markup language and a message header field is set in the integrated capability query request;
a parsing unit, configured to parse the integrated capability query request, which is received by the receiving unit, to obtain capability query requests direct to the target terminals;
an aggregating unit, configured to receive a capability query response of one or more target terminals, and aggregate the one or more responses into a capability query response; and
a sending unit, configured to send the parsed capability query request to the corresponding target terminal or send the aggregated capability query response to the requesting terminal.

With the present invention, the function of integrated capability query requests and the function of analyzing aggregated response information are added to the requesting terminal, and functions of parsing the capability query request received from the requesting terminal and aggregating target terminal capability query response messages are added to the application server (Application Server, AS), so that the requesting terminal can obtain capability information of multiple target terminals through a capability query request, thereby reducing the number of SIP OPTIONS messages to be sent and reducing network traffic.

### BRIEF DESCRIPTION OF THE DRAWINGS

FIG. 1 is a flowchart of a capability query method for a requesting terminal according to an embodiment of the present invention;
FIG. 2 is a flowchart of a capability query method for an application server according to an embodiment of the present invention;
FIG. 3 is a diagram of a network architecture for implementing an IMS capability query according to an embodiment of the present invention;
FIG. 4 is a signaling flowchart of obtaining capability information according to an embodiment of the present invention;
FIG. 5 is a signaling flowchart of obtaining AS-based cached capability information according to an embodiment of the present invention;
FIG. 6 is a flowchart of a method for obtaining capability information based on interactive operations according to an embodiment of the present invention;
FIG. 7 is a structural diagram of a communication terminal according to an embodiment of the present invention;
FIG. 8 is a structural diagram of an application server according to an embodiment of the present invention;
FIG. 9 is a structural diagram of another application server according to an embodiment of the present invention.

### DETAILED DESCRIPTION OF THE EMBODIMENTS

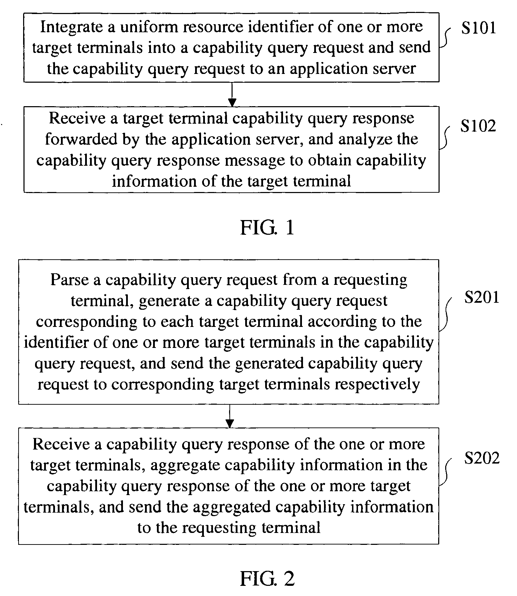

The embodiments mainly relate to improvements to a communication method for a capability query requesting terminal and an application server, where the flowchart of a capability query method for the requesting terminal is shown in FIG 1, and includes the following steps:

S101. Integrate uniform resource identifiers of one or more target terminals into a capability query request and send the capability query request to an application server (AS).

The requesting terminal sends the integrated capability query request to the AS, and then the AS parses and forwards the request to the corresponding target terminal.

The integration process specifically includes:
using an extensible markup language (Extensible Markup Language, XML) and a list mode to record uniform resource identifiers (Uniform Resource Identifier, URI) of the target terminals in a list sub-element of the integrated capability query request; setting a request URI in a request line of the integrated capability query request to a URI of the AS, setting a "To" message header (destination message header) to the URI of the AS, and setting identifiers of a "Require" message header field and a "Supported" message header (supporting message header) field to identify that the requesting terminal and the AS support the XML list; and setting a "Content-Type" message header field and a "Content-Disposition" message header field to identify that the message content in the capability query request is a list element.

S102. Receive a target terminal capability query response forwarded by the AS, and analyze the capability query response message to obtain capability information of the target terminals.

The target terminals return capability query responses to the AS after receiving the corresponding capability query request. The AS then forwards the response to the requesting terminal. The requesting terminal analyzes the capability query response from the AS, and obtains the target terminal capability information.

The analysis process specifically includes:
receiving, by the requesting terminal, the returned capability query information, extracting a "person" sub-element from the capability "capability" element, where the capability information of each target terminal is stored in the corresponding "person" sub-element and uses the URI as an identifier, obtaining the corresponding target terminals capability information, and comparing the target terminals capability information with the URI in the capability query message in the requesting terminal, and recording a target terminal whose capability information is not obtained.

The flowchart of the capability query method for the AS is shown in FIG 2, and includes the following steps:

S201. Parse a capability query request from a requesting terminal, generate a capability query request corresponding to each target terminal according to identifiers of one or more target terminals in the capability query request, and send the generated capability query requests to the corresponding target terminals respectively.

The parsing process specifically includes:
extracting the "list" element in the received capability query request, and modifying a "To" message header field corresponding to each URI in the list to identify that the target terminal is the destination of the capability query request; setting identifiers of a "Require" message header field and a "Supported" message header field to identify the format supported by the requesting terminal and AS; and setting a "Content-Type" message header field and a "Content-Disposition" message header field to identify the format of the message content in the capability query request, and generating multiple capability query requests direct to the target terminals.

S202. Receive capability query responses of the one or more target terminals, aggregate capability information in the capability query responses of the one or more target terminals, and send the aggregated capability information to the requesting terminal.

Each target terminal returns the capability query response carrying respective capability information to the AS after receiving the capability query request. The AS extracts the capability information in the response and aggregates the information into a capability query response and sends the response to the requesting terminal.

The aggregation process specifically includes:
for the aggregated capability query response, setting the "To" message header to the URI of the AS, and setting the "Content-Type" message header field and the "Content-Disposition" message header field to identify that the mode of the message body is an XML List; and creating a capability "capability" element, and storing the URI of each target terminal corresponding to the capability information in the capability query response of each target terminal into each "person" element.

### Embodiment 1

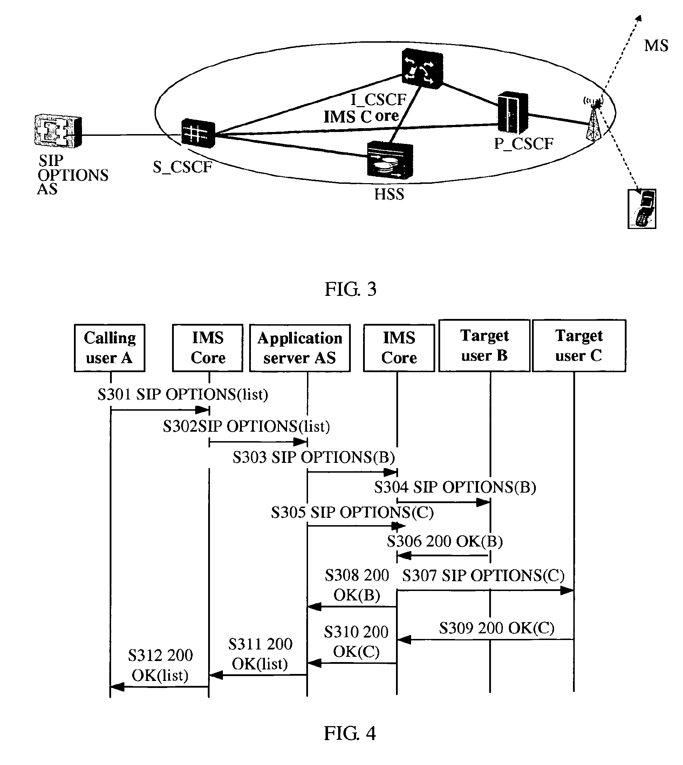

To implement an IMS capability query request, this embodiment provides a solution, and a typical network architecture of the system is shown in FIG. 3. On the basis of the conventional IMS network, the network architecture includes an AS configured to process a "SIP OPTIONS" message. In this embodiment, the calling user is a capability query requesting terminal, the target user is a target terminal, the capability query request is a "SIP OPTIONS" request, and the capability query response is a SIP OPTIONS response.

The specific "SIP OPTIONS" capability query procedure is shown in FIG. 4, and includes the following steps:
S301. A calling user A initiates a "SIP OPTIONS" capability query request to multiple target users of a IMS Core, namely, a target user B and a target user C, where the message example is similar to the following (the non-key header fields are omitted):
   OPTIONS sip: AS@ims.com
   From: <sip:user1@ims.com>;tag= 1928301774
   To: < sip:AS@ims.com >
   Call-ID: 2521180203@10.70.117.181
   Cseq : 1 OPTIONS
   Contact:
      sip:10.70.117.181:5061; +g.3gpp.cs-voice;explicit
      Accept-Contact: *;+g.3gpp.cs-voice;explicit
      Require: recipient-list-options
      Supported : recipient-list-options
      Content-Type: application/resource-lists+xml
      Content-Disposition: recipient-list
      <?xml version="1.0" encoding="UTF-8"?>
      <resource-lists xmlns="urn:ietf:params:xml:ns:resource-lists"
      xmlns:xsi="http://www.w3.org/2001/XMLSchema-instance">
      <list>
      <entry uri="sip:userB@ims.com"/>
      <entry uri="sip:userC@ims.com"/>
      </list>
      </resource-lists>

   In the initiated SIP OPTIONS message, the request URI and "To" message header field are filled with the URI corresponding to the AS, where the URI needs to be configured by the calling user.
   The message header field of the "SIP OPTIONS" message includes: an identifier "recipient-list-options" added to the "Require" message header field and "Supported" message header field, used to identify that the requesting terminal supports the list capability, and requires that the AS should support the capability. An identifier "application/resource-lists+xml" is added to the "Content-Type" message header, and an identifier "recipient-list" is added to the "Content-Disposition" message header, and is used to indicate the content type and structure of the integrated "SIP OPTIONS" message.
   An extensible markup language list mode (XML list) is used to carry URIs of multiple called target users, including the uniform resource identifier "sip:userB@ims.com" of the target user B and the uniform resource identifier "sip:userC@ims.com" of the target user C.
S302. The IMS Core forwards the "SIP OPTIONS" message to the AS according to the routing policy and the URI of the AS in the request.
S303 and S305. After the AS receives the "SIP OPTIONS" message forwarded by the IMS Core of the calling user side, the AS parses the list information of the message, creates two "SIP OPTIONS" messages respectively according to the URIs of the target users B and C obtained by parsing, and sets the "To" message header fields of the "SIP OPTIONS" messages to "sip:userB@ims.com" and "sip:userC@ims.com" respectively, identifying that the target terminals corresponding to the "SIP OPTIONS" messages are target user B and target user C; sets identifiers of the "SIP OPTIONS" requiring message header field and supporting message header field respectively, identifying the mode supported by the requesting terminal and AS; and sets the content-type message field and content-disposition message header field of the "SIP OPTIONS" respectively, identifying the mode of the message content in the capability query request, and then initiates a "SIP OPTIONS" message including the URI of the corresponding target terminal to each user in the list. The setting is similar to the following (some header field information is omitted):
   OPTIONS sip:userB@ims.com
   From: <sip:user1@ims.com>;tag=1928301774
   To: <sip:userB@ims.com>
   Contact: sip:10.70.117.181:5061; +g.3gpp.cs-voice;
   Accept: application/sdp
   Content-Length: 0

   As seen from the above message example, the "SIP OPTIONS" message initiated by the AS is the same as the standard "SIP OPTIONS" message, that is, for the target user, it is unnecessary to support the capability of processing the list.
S304, S306, S307, and S309. The AS obtains the capability query requests corresponding to the target users by parsing, forwards the capability query requests to the target users user B and user C through the IMS Core of the target users, and receives the capability query responses "SIP OPTIONS 200 OK(C)" of the target users, where the responses include capability information of the corresponding target terminals.
S308 and S310. The IMS Core of the target users forwards the "SIP OPTIONS" responses of the target users user B and user C to the AS after receiving the responses; the AS aggregates capability information of all target users as the capability query response to the requesting terminal, and returns a "SIP OPTIONS 200 OK(list)" response including the list structure to the IMS Core of the requesting terminal, for example:
   SIP/2.0 200 OK
   Via: SIP/2.0/UDP 192.168.0.1:5061;branch=z9hG4bK3517238057
   From: <sip:user1 @ims.com>;tag=1963339602
   To: < sip:AS@ims.com >;tag=a26548f6
   CSeq: 1 OPTIONS
   Contact: <sip:192.168.1.1:5061>;
   Content-Type: application/xml
   <?xml version="1.0" encoding="UTF-8"?>
   <capability>
   <person>
   <contact> sip:userB@ims.com </contact>
   <service-id>+g.3gpp.cs-voice </service-id>
   <service-id>+g.3gpp.app_ref="urn%3Aurn-xxx%3A3gpp
   application.ims.iari.gsma-is" </service-id>
   </person>
   <person>
   <contact> sip:userC@ims.com </contact>
   <service-id>+g.3gpp.cs-voice </service-id>
   <service-id>+g.3gpp.app_ref="urn%3Aurn-xxx%3A3gpp
   application.ims.iari.gsma-is" </service-id>
   </person>
   </capability>

   The "To" message header is modified to the URI of the AS, as shown by the above "sip:AS@ims.com"; the "Content-Type" message header is modified to "application/xml" to indicate the XML List; a "capability" element is created, and the URI of each target terminal corresponding to the capability information in the received capability query response of each target terminal is stored in each "person" sub-element, and the program indicates "+g.3gpp.cs-voice", namely, the call capability, and "+g.3gpp.app_ref = urn%3Aurn- xxx%3A3gppapp lication.ims. iari. gsma-is"", namely, the image sharing capability.
S311. The IMS Core of the requesting terminal receives the "SIP OPTIONS 200 OK(list)" response message including the list structure from the AS, and forwards the response to the requesting terminal.
S312. After the calling user receives the response returned by the AS, the calling user parses the list information and updates the capability information of the target user terminals. Because the requesting terminal has indicated that the list capability is supported, the list information can be parsed, and the capability information of the target user terminals included in the response can be obtained.

Usually the requesting terminal sends the capability query request in the following cases: When the requesting terminal registers with the IMS Core for the first time, the requesting terminal sends the capability query request to obtain a default set of capability information of the contacts in the requesting terminal; when a new contact is added to the contact list of the requesting terminal or the mobile station integrated services digital network number MSISDN of an existing contact is modified, capability information also needs to be obtained again; and when a valid "POLLING PERIOD" parameter is set and the requesting terminal is in an interactive state, the requesting terminal cyclically sends a capability information request to a contact that does not return capability information in the terminal, where the interactive state is a state in which a function operation behavior is performed on the terminal within a specified time and the terminal is capable of responding to the behavior.

In the above embodiment, the requesting terminal integrates the capability information in multiple capability query requests and analyzes the capability information in the capability query responses in the prior art, and the AS parses the capability query request and aggregates the capability query responses, so that multiple "SIP OPTIONS" messages originally needed for obtaining capability information are reduced effectively, and that the "SIP OPTIONS" message traffic of the requesting terminal and the network and power consumption of the terminal are reduced.

### Embodiment 2

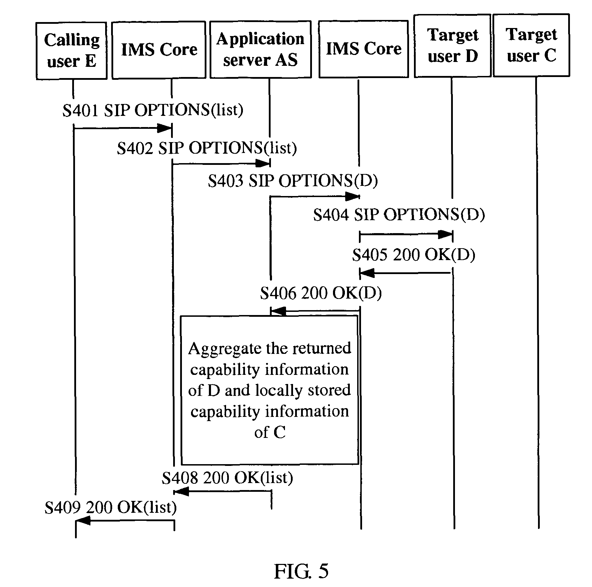

To further reduce the message traffic on the network of the target user side, a storing unit is arranged in the AS. The AS may temporarily store the found user capability information into the storing unit. Within the validity period of information, for the capability query request corresponding to the target user, if the storing unit stores the capability information of the target terminal, it is unnecessary to send a capability query request to the target terminal and the stored capability information is directly used; and the expired capability information in the cache is deleted by the AS from the storing unit, and capability information is obtained from the target terminal when there is a next corresponding target capability query request, and is stored in the storing unit. In this embodiment, the calling user is a capability query requesting terminal, and the target user is a target terminal. As shown in FIG. 5, the procedure specifically includes the following steps:
S401. A calling user E initiates a request for querying capabilities of a target user C and a target user D, and sends the request information to an IMS Core of the calling user E.
S402. The request information is sent to the AS through the IMS Core of the calling user E; after the AS receives a list-based "SIP OPTIONS" message of the calling user E, the AS parses the URIs of the target user C and target user D in the "list" element of the "SIP OPTIONGS" message, and further finds that the capability information of user C is already stored in the local storing unit and is within the validity period, but there is no capability information of user D.
S403. The AS initiates a capability query request to the IMS Core of the user D.
S404 and S405. Through the IMS Core of the called user, the capability query request is forwarded to the target user D and the capability query response of the target user D is received.
S406 and S407. The AS receives the capability query response of the target user D returned by the IMS Core of the target user D, combines the capability information of the target user C stored in the storing unit of the AS, and aggregates the capability information into a multi-user capability query response "SIP OPTION 200 OK(list)" including a list of the target user capability information.
S408 and S409. The capability query response aggregated by the AS is sent to the requesting terminal through the IMS Core of the requesting terminal, and the calling user E parses the response information to obtain the capability information of the target user D and target user C.

The capability information in the capability query request mainly includes: an "IM/Chat", a "File transfer", an "Image share", an "Video share", and "Social presence information".

In this embodiment, a storing unit is arranged in the AS, and the target terminal capability information is temporarily stored, thereby overcoming the weakness of the prior art that every capability query request requires a response from the target terminal, and effectively reducing the "SIP OPTIONS" message traffic of the target terminal and network.

### Embodiment 3

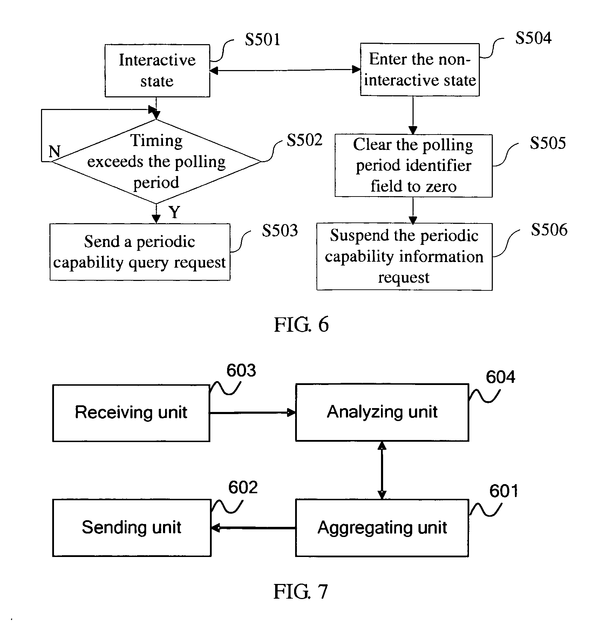

For a user terminal, when the terminal runs in a non-interactive state, for example, when the terminal is in a standby state, or a user is watching a video, or listening to music with the terminal, the capability query function may be suspended; when the terminal runs in an interactive state, namely, a state in which a function operation behavior is performed for the terminal within a specified time and the terminal is capable of responding to the behavior, and when the user uses the requesting terminal to perform IM communication, video chatting, file transfer, or voice call the capability query function is enabled. In this embodiment, the target user is a target terminal. FIG 6 is a flowchart of the implementation, and the process includes the following:
S501. A terminal is in the interactive state, namely, a state in which a function operation behavior is performed for the terminal within a specified time and the terminal is capable of responding to the behavior, for example, IM communication, video chatting, file transfer, and voice call.
   At the first time when the terminal completes the registration with the IMS Core, a polling period "POLLING PERIOD" value is set.
   When the terminal enters the interactive state from the non-interactive state, the terminal sends information carrying a valid "POLLING PERIOD" value to a mobile network operator(Mobile Network Operator, MNO), and enables the periodic capability query function.
S502. The polling period is checked, and when the timing does not exceed the polling period, the timing continues in the background and the operation in the next step is not performed until the timing reaches the preset polling period.
S503. When the timing reaches the preset polling period, the terminal sends a capability query request to the target user whose capability information is not obtained or is expired in the contact list. The specific sending process is as described in the first embodiment, and is not further described herein.
S504. When the timing exceeds the specified time or the user actively locks the terminal, the terminal enters the non-interactive state from the interactive state, where the non-interactive state includes the following cases: listening to music or watching a video by using the locked terminal without any operation.
S505. When the terminal enters the non-active state from the interactive state, the terminal sends a message with the "POLLING PERIOD" value cleared to zero to the MNO, and disables the periodic capability query function.
S506. The "POLLING PERIOD" value is cleared to zero and the periodic capability information request process is suspended.

On the basis of considering the user experience, the above embodiment overcomes the inflexibility of the capability query request when the requesting terminal is in different states in the prior art, and effectively reduces the capability information interaction process in the non-interactive state, so that the "SIP OPTIONS" message traffic of the network is optimized.

As shown in FIG 7, embodiment of the present invention further provides a communication terminal, including:
an integrating unit 601, configured to integrate an identifier of one or more target user terminals whose capability information needs to be queried into a capability query request;
a sending unit 602, configured to send the integrated capability query request to an AS;
a receiving unit 603, configured to receive a capability query response aggregated by the AS; andA
an analyzing unit 604, configured to analyze the aggregated capability query response received by the receiving unit to obtain a capability query response of a corresponding target terminal.

Further, the analyzing unit compares the analysis result with the list of the capability query requests, and records a target terminal to which a capability query request needs to be retransmitted.

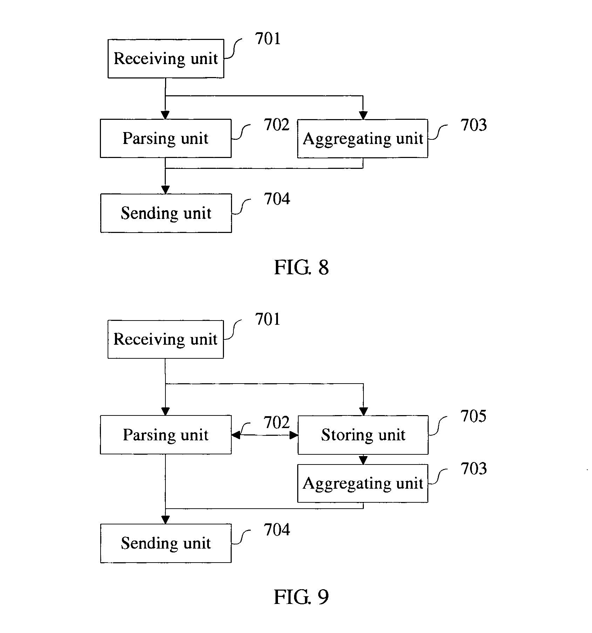

As shown in FIG. 8, an AS further provided by an embodiment of the present invention includes:
a receiving unit 701, configured to receive a capability query request integrated by a requesting terminal or a capability query response from a target terminal;
a parsing unit 702, configured to parse the integrated capability query request received by the receiving unit to obtain a capability query response of the corresponding target terminal;
an aggregating unit 703, configured to receive a capability query response of one or more target terminals, and aggregate the one or more responses into a capability query response; and
a sending unit 704, configured to send the parsed capability query request to the target terminal or send the aggregated capability query response to the requesting terminal.

Further, as shown in FIG 9, an embodiment of the present invention further provides an AS. In addition to the units shown in FIG. 7, the AS further includes:
a storing unit 705, configured to store the capability information obtained by the receiving unit of the AS and returned by the target terminal, and delete the corresponding information that is beyond the validity period.

It will be apparent to persons skilled in the art that various modifications and variations can be made to the present invention without departing from the scope of the present invention. In view of the foregoing, it is intended that the present invention cover such modifications and variations of the present invention provided that they fall within the scope of the following claims and their equivalents.

## Claims

1. A capability query method, comprising:
Integrating (S101) uniform resource identifiers of one or more target terminals into a capability query request and sending the capability query request to an application server; and
receiving (S102) a target terminal capability query response forwarded by the application server, and analyzing the capability query response to obtain capability information of the target terminal;
wherein the integrating uniform resource identifiers of one or more target terminals into a capability query request comprises:
using an extensible markup language and a list mode to record uniform resource identifiers of multiple target terminals in a list element of the integrated capability query request, and setting a message header field in the capability query request.

2. The method according to claim 1, wherein the setting a message header field in the capability query request specifically comprises:
setting identifiers of a requiring message header field and a supporting message header field to identify that a requesting terminal and the application server support recording in the list mode; and setting a content-type message header field and a content-disposition message header field to identify a format of a message content in the capability query request.

3. The method according to claim 1, wherein the capability query request is initiated under the following condition:
a requesting terminal registers with a IMS Core for a first time, or a new contact is added to a contact list of the requesting terminal, or a mobile station integrated services digital network number of an existent contact is modified, or a valid polling period is set for the requesting terminal and the requesting terminal is in an interactive state.

4. The method according to claim 3, wherein the interactive state is:
a state in which a function operation behavior is performed for a terminal and the terminal is capable of responding to the behavior within a specified time.

5. The method according to claim 1, wherein the analyzing the capability query response message to obtain capability information of the target terminal is:
extracting capability information of a corresponding target terminal from each person sub-element, which is comprised in a capability element of the capability query response;
comparing the capability information with a uniform resource identifier in a capability query message in a requesting terminal, and recording the target terminal whose capability information is not obtained.

6. The method according to claim 1 or 5, wherein the capability information comprises:
an instant messaging or call capability, a file transfer capability, an image sharing capability, an audio sharing capability, or social presence information.

7. A capability query method, comprising:
parsing (S201) a capability query request from a requesting terminal, wherein uniform resource identifiers of multiple target terminals are recorded in a list element of the capability query request by using a list mode and an extensible markup language and a message header field is set in the capability query request; generating capability query requests corresponding to each target terminal according to identifiers of one or more target terminals in the capability query request, and sending the generated capability query requests to the corresponding target terminals respectively; and
receiving (S202) a capability query response of the one or more target terminals, aggregating capability information in the capability query response of the one or more target terminals, and sending the aggregated capability information to the requesting terminal.

8. The method according to claim 7, wherein the parsing a capability query request from a requesting terminal and generating capability query requests corresponding to each target terminal according to identifiers of one or more target terminals in the capability query request specifically comprise:
according to a uniform resource identifier of each target terminal in the capability query request, modifying a destination message header field, and identifying a target terminal as a destination address; setting identifiers of a requiring message header field and a supporting message header field to identify a mode supported by the requesting terminal and an application server; and setting a content-type message header field and a content-disposition message header field to identify a format of a message content in the capability query request.

9. The method according to claim 7, wherein the generating a capability query request corresponding to each target terminal according to an identifier of one or more target terminals in the capability query request comprises:
setting identifiers of a requiring message header field and a supporting message header field to identify that a requesting terminal and an application server support recording in a list mode; and setting a content-type message header field and a content-disposition message header field to identify a format of a message content in the capability query request.

10. The method according to claim 7, wherein the aggregating capability information in the capability query response of the one or more target terminals specifically comprises:
creating a capability element;
setting capability information of each target terminal to a person sub-element of the capability element, and generating a capability query response comprising the capability information of each target terminal.

11. The method according to claim 7 or 10, further comprising:
after receiving the capability query response of the one or more target terminals, correspondingly storing uniform resource identifiers and capability information of the target terminals into a storing unit of an application server, wherein the stored capability information is deleted by the application server from the storing unit after a validity period expires, and existent capability information of the target terminals in the storing unit are used as responses to target terminal capability query requests.

12. A communication terminal, comprising:
an integrating unit (601), configured to integrate uniform resource identifiers of one or more target user terminals whose capability information needs to be queried into a capability query request;
a sending unit (602), configured to send the integrated capability query request to an application server;
a receiving unit (603), configured to receive a capability query response aggregated by the application server; and
an analyzing unit (604), configured to analyze the aggregated capability query response received by the receiving unit (603) to obtain a capability query response of the corresponding target terminal; wherein the analyzing unit:
is further configured to analyze the obtained target terminal capability information, compare the capability information with a list of capability query requests, and record a target terminal to which a capability query request needs to be retransmitted.

13. An application server, comprising:
a receiving unit (701), configured to receive an integrated capability query request from a requesting terminal or a capability query response from a target terminal; wherein uniform resource identifiers of multiple target terminals are recorded in a list element of the capability query request by using a list mode and an extensible markup language and a message header field is set in the integrated capability query request;
a parsing unit (702), configured to parse the integrated capability query request received by the receiving unit to obtain a capability query request direct to the target terminals ;
an aggregating unit (703), configured to receive a capability query response of one or more target terminals, and aggregate the one or more responses into a capability query response; and
a sending unit (704), configured to send the parsed capability query request to the corresponding target terminal or send the aggregated capability query response to the requesting terminal.

## Patentansprüche

1. Kapazitätsabfrageverfahren, umfassend:
Integrieren (S101) gleichförmiger Ressourcenkennungen eines oder mehrerer Zielendgeräte in eine Kapazitätsabfrageanforderung und Senden der Kapazitätsabfrageanforderung an einen Anwendungsserver; und
Empfangen (S102) einer durch den Anwendungsserver weitergeleiteten Kapazitätsabfrageantwort eines Zielendgeräts und Analysieren der Kapazitätsabfrageantwort, um Kapazitätsinformationen des Zielendgeräts zu erhalten;
wobei das Integrieren der gleichförmigen Ressourcenkennungen eines oder mehrerer Zielendgeräte in eine Kapazitätsabfrageanforderung umfasst:
Verwenden einer erweiterbaren Auszeichnungssprache und eines Listenmodus, um die gleichförmigen Ressourcenkennungen mehrerer Zielendgeräte in einem Listenelement der integrierten Kapazitätsabfrageanforderung einzutragen, und Einstellen eines Nachrichtenkopfzeilenfeldes in der Kapazitätsabfrageanforderung.

2. Verfahren nach Anspruch 1, wobei das Einstellen eines Nachrichtenkopfzeilenfeldes in der Kapazitätsabfrageanforderung insbesondere umfasst:
Einstellen von Kennungen eines Kopfzeilenfeldes einer anfordernden Nachricht und eines Kopfzeilenfeldes einer unterstützenden Nachricht, um zu identifizieren, dass ein anforderndes Endgerät und der Anwendungsserver das Eintragen in den Listenmodus unterstützen, und Einstellen eines Kopfzeilenfeldes einer inhaltsartigen Nachricht und eines Kopfzeilenfeldes einer Inhaltsdispositionsnachricht, um ein Format eines Nachrichteninhalts in der Kapazitätsabfrageanforderung zu identifizieren.

3. Verfahren nach Anspruch 1, wobei die Kapazitätsabfrageanforderung unter der folgenden Bedingung ausgelöst wird:
ein anforderndes Endgerät meldet sich zum ersten Mal bei einem IMS-Kern an oder ein neuer Kontakt wird zu einer Kontaktliste des anfordernden Endgeräts hinzugefügt oder eine dienstintegrierende digitale Netznummer einer Mobilfunkstation (Mobile Station Integrated Services Digital Network Number) eines bestehenden Kontakts wird verändert oder ein gültiger Zeitraum für zyklische Abfragen wird für das anfordernde Endgerät eingestellt und das anfordernde Endgerät befindet sich in einem interaktiven Zustand.

4. Verfahren nach Anspruch 3, wobei der interaktive Zustand:
ein Zustand ist, in dem ein Funktionsbetriebsverhalten für ein Endgerät ausgeführt wird und das Endgerät in der Lage ist, innerhalb eines festgelegten Zeitraums auf das Verhalten zu antworten.

5. Verfahren nach Anspruch 1, wobei das Analysieren der Kapazitätsabfrageantwortnachricht zum Erhalten der Kapazitätsinformationen des Zielendgeräts Folgendes ist:
Extrahieren der Kapazitätsinformationen eines entsprechenden Zielendgeräts aus jedem Personenteilelement, das in einem Kapazitätselement der Kapazitätsabfrageantwort enthalten ist;
Vergleichen der Kapazitätsinformationen mit einer gleichförmigen Ressourcenkennung in einer Kapazitätsabfragenachricht in einem anfordernden Endgerät und Eintragen des Zielendgeräts, dessen Kapazitätsinformationen nicht erhalten werden.

6. Verfahren nach Anspruch 1 oder 5, wobei die Kapazitätsinformationen umfassen:
eine Sofortnachrichten- oder Anrufkapazität, eine Datenübertragungskapazität, eine Bildverbreitungskapazität, eine Audioverbreitungskapazität oder Informationen zur sozialen Präsenz.

7. Kapazitätsabfrageverfahren, umfassend:
Zergliedern (S201) einer Kapazitätsabfrageanforderung von einem anfordernden Endgerät, wobei gleichförmige Ressourcenkennungen mehrerer Zielendgeräte in ein Listenelement der Kapazitätsabfrageanforderung eingetragen werden, indem ein Listenmodus und eine erweiterbare Auszeichnungssprache verwendet werden, und ein Nachrichtenkopfzeilenfeld in der Kapazitätsabfrageanforderung eingestellt wird;
Erzeugen von Kapazitätsabfrageanforderungen, die jedem Zielendgerät gemäß den Kennungen eines oder mehrerer Zielandgeräte in der Kapazitätsabfrageanforderung entsprechen, und Senden der erzeugten Kapazitätsabfrageanforderungen jeweils an die entsprechenden Zielendgeräte; und
Empfangen (S202) einer Kapazitätsabfrageantwort des einen oder der mehreren Zielendgeräte, Einfügen von Kapazitätsinformationen in die Kapazitätsabfrageantwort des einen oder der mehreren Zielendgeräte, und Senden der eingefügten Kapazitätsinformationen an das anfordernde Endgerät.

8. Verfahren nach Anspruch 7, wobei das Zergliedern einer Kapazitätsabfrageanforderung von einem anfordernden Endgerät und das Erzeugen von Kapazitätsabfrageanforderungen, die jedem Zielendgerät gemäß den Kennungen eines oder mehrerer Zielandgeräte in der Kapazitätsabfrageanforderung entsprechen, insbesondere umfassen:
gemäß einer gleichförmigen Ressourcenkennung von jedem Zielendgerät in der Kapazitätsabfrageanforderung, Verändern eines Kopfzeilenfeldes einer Bestimmungsnachricht, und Identifizieren eines Zielendgeräts als eine Bestimmungsadresse; Einstellen von Kennungen eines Kopfzeilenfeldes einer anfordernden Nachricht und eines Kopfzeilenfeldes einer unterstützenden Nachricht,
um einen Modus zu identifizieren, der von dem anfordernden Endgerät und einem Anwendungsserver unterstützt wird; und Einstellen eines Kopfzeilenfeldes einer inhaltsartigen Nachricht und eines Kopfzeilenfeldes einer Inhaltsdispositionsnachricht, um ein Format eines Nachrichteninhalts in der Kapazitätsabfrageanforderung zu identifizieren.

9. Verfahren nach Anspruch 7, wobei das Erzeugen einer Kapazitätsabfrageanforderung, die jedem Zielendgerät gemäß einer Kennung eines oder mehrere Zielendgeräte in der Kapazitätsabfrageanforderung entspricht, umfasst: Einstellen von Kennungen eines Kopfzeilenfeldes einer anfordernden Nachricht und eines Kopfzeilenfeldes einer unterstützenden Nachricht, um zu identifizieren, dass ein anforderndes Endgerät und ein Anwendungsserver das Eintragen in einen Listenmodus unterstützen; und Einstellen eines Kopfzeilenfeldes einer inhaltsartigen Nachricht und eines Kopfzeilenfeldes einer Inhaltsdispositionsnachricht, um ein Format eines Nachrichteninhalts in der Kapazitätsabfrageanforderung zu identifizieren.

10. Verfahren nach Anspruch 7, wobei das Einfügen von Kapazitätsinformationen in die Kapazitätsabfrageantwort des einen oder der mehreren Zielendgeräte insbesondere umfasst:
Erschaffen eines Kapazitätselements;
Einstellen von Kapazitätsinformationen von jedem Zielendgerät in einem Personenteilelement des Kapazitätselements und Erzeugen einer Kapazitätsabfrageantwort, welche die Kapazitätsinformationen von jedem Zielendgerät umfasst.

11. Verfahren nach Anspruch 7 oder 10, das außerdem umfasst:
nach dem Empfangen der Kapazitätsabfrageantwort des einen oder der mehreren Zielendgeräte, entsprechendes Speichern der gleichförmigen Ressourcenkennungen und der Kapazitätsinformationen der Zielendgeräte in einer Speichereinheit eines Anwendungsservers, wobei die gespeicherten Kapazitätsinformationen von dem Anwendungsserver aus der Speichereinheit gelöscht werden, nachdem ein Gültigkeitszeitraum abgelaufen ist, und vorhandene Kapazitätsinformationen der Zielendgeräte in der Speichereinheit als Antworten auf die Kapazitätsabfrageanforderungen der Zielendgeräte verwendet werden.

12. Kommunikationsendgerät, umfassend:
eine Integriereinheit (601), die konfiguriert ist, gleichförmige Ressourcenkennungen von einem oder mehreren Zielbenutzerendgeräten zu integrieren, deren Kapazitätsinformationen in einer Kapazitätsabfrageanforderung abgefragt werden müssen;
eine Sendeeinheit (602), die konfiguriert ist, die Kapazitätsabfrageanforderung an einen Anwendungsserver zu senden;
eine Empfangseinheit (603), die konfiguriert ist, eine von dem Anwendungsserver eingefügte Kapazitätsabfrageantwort zu empfangen; und
eine Analysiereinheit (604), die konfiguriert ist, die von der Empfangseinheit (603) empfangene, eingefügte Kapazitätsabfrageantwort zu analysieren, um eine Kapazitätsabfrageantwort des entsprechenden Zielendgeräts zu erhalten, wobei die Analysiereinheit:
außerdem konfiguriert ist, die erhaltenen Kapazitätsinformationen des Zielendgeräts zu analysieren, die Kapazitätsinformationen mit einer Liste von Kapazitätsabfrageantworten zu vergleichen und ein Zielendgerät einzutragen, an das eine Kapazitätsabfrageanforderung erneut übertragen werden muss.

13. Anwendungsserver, umfassend:
eine Empfangseinheit (701), die konfiguriert ist, eine integrierte Kapazitätsabfrageanforderung von einem anfordernden Endgerät oder eine Kapazitätsabfrageantwort von einem Zielendgerät zu empfangen; wobei gleichförmige Ressourcenkennungen mehrerer Zielendgeräte in ein Listenelement der Kapazitätsabfrageanforderung eingetragen werden, indem ein Listenmodus und eine erweiterbare Auszeichnungssprache verwendet werden und ein Nachrichtenkopfzeilenfeld in der integrierten Kapazitätsabfrageanforderung eingestellt wird;
eine Zergliederungseinheit (702), die konfiguriert ist, die von der Empfangseinheit empfangene, integrierte Kapazitätsabfrageanforderung zu zergliedern, um eine Kapazitätsabfrageanforderung direkt zu den Zielendgeräten zu erhalten;
eine Einfügeeinheit (703), die konfiguriert ist, eine Kapazitätsabfrageantwort von einem oder mehreren Zielendgeräten zu empfangen und die eine oder mehreren Antworten in eine Kapazitätsabfrageantwort einzufügen; und
eine Sendeeinheit (704), die konfiguriert ist, die zergliederte Kapazitätsabfrageanforderung an das entsprechende Zielendgerät zu senden oder die eingefügte Kapazitätsabfrageantwort an das anfordernde Endgerät zu senden.

## Revendications

1. Procédé d'interrogation de capacité, comprenant les étapes suivantes :
intégrer (S101) des identifiants uniformes de ressource d'un ou plusieurs terminaux cibles en une demande d'interrogation de capacité et envoyer la demande d'interrogation de capacité à un serveur d'application ; et
recevoir (S102) une réponse à l'interrogation de capacité de terminal cible retransmise par le serveur d'application, et analyser la réponse à l'interrogation de capacité pour obtenir des informations de capacité du terminal cible ;
où l'intégration des identifiants uniformes de ressource d'un ou plusieurs terminaux cibles en une demande d'interrogation de capacité comprend les étapes suivantes :
utiliser un langage de balisage extensible et un mode de liste pour enregistrer les identifiants uniformes de ressource de plusieurs terminaux cibles dans un élément de liste de la demande d'interrogation de capacité intégrée, et définir un champ d'en-tête de message dans la demande d'interrogation de capacité.

2. Procédé selon la revendication 1, dans lequel la définition d'un champ d'en-tête de message dans la demande d'interrogation de capacité comprend les étapes suivantes :
définir des identifiants d'un champ d'en-tête de message de demande et d'un champ d'en-tête de message de support pour identifier qu'un terminal effectuant la demande et le serveur d'application supportent l'enregistrement dans le mode de liste ; et
définir un champ d'en-tête de message de type de contenu et un champ d'en-tête de message de disposition de contenu pour identifier un format d'un contenu de message dans la demande d'interrogation de capacité.

3. Procédé selon la revendication 1, dans lequel la demande d'interrogation de capacité est initiée à la condition suivante :
un terminal effectuant une demande se connecte à un noyau IMS pour la première fois, ou un nouveau contact est ajouté à une liste de contacts du terminal effectuant la demande, ou un numéro de réseau numérique à services intégrés de station mobile d'un contact existant est modifié, ou une période de sondage valide est définie pour le terminal effectuant la demande et le terminal effectuant la demande est dans un état interactif.

4. Procédé selon la revendication 3, dans lequel l'état interactif est :
un état dans lequel un comportement opérationnel de fonction est réalisé pour un terminal, et le terminal est capable de répondre au comportement en un temps spécifié.

5. Procédé selon la revendication 1, dans lequel l'analyse du message de réponse à l'interrogation de capacité pour obtenir des informations de capacité du terminal cible comprend les étapes suivantes :
extraire des informations de capacité d'un terminal cible correspondant à partir de chaque sous-élément de personne, qui est compris dans un élément de capacité de la réponse d'interrogation de capacité ;
comparer les informations de capacité à un identifiant uniforme de ressource dans un message d'interrogation de capacité dans un terminal effectuant une demande, et enregistrer le terminal cible dont les informations de capacité ne sont pas obtenues.

6. Procédé selon la revendication 1 ou la revendication 5, dans lequel les informations de capacité comprennent :
une capacité de messagerie instantanée ou d'appel, une capacité de transfert de fichiers, une capacité de partage d'images, une capacité de partage audio, ou des informations de présence sociale.

7. Procédé d'interrogation de capacité, comprenant les étapes suivantes :
analyser (S201) une demande d'interrogation de capacité à partir d'un terminal effectuant une demande, où des identifiants uniformes de ressource de plusieurs terminaux cibles sont enregistrés dans un élément de liste de la demande d'interrogation de capacité en utilisant un mode de liste et un langage de balisage extensible et un champ d'en-tête de message est défini dans la demande d'interrogation de capacité ; générer des demandes d'interrogation de capacité correspondant à chaque terminal cible conformément à des identifiants d'un ou plusieurs terminaux cibles dans la demande d'interrogation de capacité, et envoyer les demandes d'interrogation de capacité générées aux terminaux cibles correspondants, respectivement ; et
recevoir (S202) une réponse à l'interrogation de capacité du ou des terminaux cibles, agréger les informations de capacité dans la réponse à l'interrogation de capacité du ou des terminaux cibles, et envoyer les informations de capacité agrégées au terminal effectuant la demande.

8. Procédé selon la revendication 7, dans lequel l'analyse d'une demande d'interrogation de capacité depuis un terminal effectuant la demande et la génération de demandes d'interrogation de capacité correspondant à chaque terminal cible selon des identifiants d'un ou plusieurs terminaux cibles dans la demande d'interrogation de capacité comprennent spécifiquement les étapes suivantes :
en fonction d'un identifiant uniforme de ressource de chaque terminal cible dans la demande d'interrogation de capacité, modifier un champ d'en-tête de message de destination et identifier un terminal cible comme adresse de destination ; définir des identifiants d'un champ d'en-tête de message effectuant une demande et un champ d'en-tête de message de disposition de contenu pour identifier un format d'un contenu de message dans la demande d'interrogation de capacité.

9. Procédé selon la revendication 7, dans lequel la génération d'une demande d'interrogation de capacité correspondant à chaque terminal cible conformément à un identifiant d'un ou plusieurs terminaux cibles dans la demande d'interrogation de capacité comprend les étapes suivantes :
définir des identifiants d'un champ d'en-tête de message effectuant la demande et d'un champ d'en-tête de message de support pour identifier qu'un terminal effectuant une demande et un serveur d'application supportent l'enregistrement dans un mode de liste ; et définir un champ d'en-tête de message de type de contenu et un champ d'en-tête de message de disposition de contenu pour identifier un format d'un contenu de message dans la demande d'interrogation de capacité.

10. Procédé selon la revendication 7, dans lequel l'agrégation d'informations de capacité d'agrégation dans la réponse à l'interrogation de capacité du ou des terminaux cibles comprend spécifiquement les étapes suivantes :
créer un élément de capacité ;
définir des informations de capacité de chaque terminal cible au niveau d'un sous-élément de personne de l'élément de capacité, et générer une réponse d'interrogation de capacité comprenant les informations de capacité de chaque terminal cible.

11. Procédé selon la revendication 7 ou la revendication 10, comprenant en outre les étapes suivantes :
après réception de la réponse d'interrogation de capacité du ou des terminaux cibles, stocker de manière correspondante des identifiants uniformes de ressource et des informations de capacité des terminaux cibles dans une unité de stockage d'un serveur d'application, où les informations de capacité stockées sont effacées par le serveur d'application de l'unité de stockage après qu'une période de validité a expiré, et des informations de capacité existantes des terminaux cibles dans l'unité de stockage sont utilisées comme réponses aux demandes d'interrogation de capacité de terminal cible.

12. Terminal de communication, comprenant :
une unité d'intégration (601) configurée pour intégrer des identifiants uniformes de ressource d'un ou plusieurs terminaux cibles dont les informations de capacité doivent être interrogées en une demande d'interrogation de capacité ;
une unité d'envoi (602), configurée pour envoyer la demande d'interrogation de capacité intégrée à un serveur d'application ;
une unité de réception (603), configurée pour recevoir une réponse à l'interrogation de capacité agrégée par le serveur d'application ; et
une unité d'analyse (604), configurée pour analyser la réponse à l'interrogation de capacité agrégée reçue par l'unité de réception (603) pour obtenir une réponse à l'interrogation de capacité du terminal cible correspondant ; où l'unité d'analyse :
est en outre configurée pour analyser les informations de capacité de terminal cible obtenues, comparer les informations de capacité à une liste de demandes d'interrogation de capacité, et enregistrer un terminal cible auquel une demande d'interrogation de capacité doit être retransmise.

13. Serveur d'application, comprenant :
une unité de réception (701), configurée pour recevoir une demande d'interrogation de capacité intégrée d'un terminal effectuant une demande ou une réponse d'interrogation de capacité depuis un terminal cible ; où des identifiants uniformes de ressource de plusieurs terminaux cibles sont enregistrés dans un élément de liste de la demande d'interrogation de capacité en utilisant un mode de liste et un langage de balisage extensible et un champ d'en-tête de message est défini dans la demande d'interrogation de capacité intégrée ;
une unité d'analyse (702), configurée pour analyser la demande d'interrogation de capacité intégrée reçue par l'unité de réception pour obtenir une demande d'interrogation de capacité directement au niveau des terminaux cibles ;
une unité d'agrégation (703), configurée pour recevoir une réponse d'interrogation de capacité d'un ou plusieurs terminaux cibles, et pour agréger la ou les réponses en une réponse à l'interrogation de capacité ; et
une unité d'envoi (704), configurée pour envoyer la demande d'interrogation de capacité analysée au terminal cible correspondant ou pour envoyer la réponse d'interrogation de capacité agrégée au terminal effectuant la demande.
